Europäisches Patentamt

European Patent Office

Office européen des brevets

(19)

(11) Publication number: **0 177 226 B1**

# EUROPEAN PATENT SPECIFICATION

(12)

(45) Date of publication of patent specification: **01.04.92** (51) Int. Cl.⁵: **C09K 17/00, A01G 13/02**

(21) Application number: **85306661.1**

(22) Date of filing: **19.09.85**

(54) **Liquid mulch.**

(30) Priority: **20.09.84 US 652528**

(43) Date of publication of application:
**09.04.86 Bulletin 86/15**

(45) Publication of the grant of the patent:
**01.04.92 Bulletin 92/14**

(84) Designated Contracting States:
**BE CH DE FR GB IT LI SE**

(56) References cited:
**FR-A- 2 464 977**
**US-A- 3 336 129**
**US-A- 3 900 378**

(73) Proprietor: **BASF Aktiengesellschaft**
**Carl-Bosch-Strasse 38**
**W-6700 Ludwigshafen(DE)**

(72) Inventor: **Pole, Ernest George**
**1862 Lakeland Avenue**
**Sarnia Ontario(CA)**
Inventor: **Carnell, David**
**8009 Alderwood Drive**
**Sarasota Florida(US)**

Rank Xerox (UK) Business Services

**Description**

The present invention relates to a liquid agent for various purposes. Crop production may be enhanced in e.g. up to four ways by the liquid agent. Thus, the liquid agent may enhance production by providing at least one of: increased plant population, increased yield, a reduced time to plant maturity, and an increased survival rate through decreased stress on plants. Any method of increasing crop production is valuable to the agricultural, horticultural, or reforestation industries. A method of decreasing the time to crop maturation is of significant interest to fresh produce farmers as it provides earlier crops which may often be sold at a premium price. It also permits staggering the receipt of harvested crops over a longer period of time. The staggering of crops permits food processing plants to have a more uniform production. In areas where successive crops are grown during the year, decreasing the period of time to harvest may permit the planting of an additional crop further increasing the total production from the land under cultivation. In horticultural industries this results in a shorter time for trays of plants to be ready for marketing. This will increase green house yields for decorative plants, potted plants and vegetables for transplanting.

In the production of vegetables, there has been an increasing trend to use plastic film mulch. This mulch helps keep weeds down, reduces the leaching of minerals from the soil, retains moisture, warms the soil and in some cases helps retain volatile fumigants applied to the soil prior to planting. Some plastic mulches are promoted as photodegradable. This usually involves incorporating a photo-degradable component in the plastic. It is difficult to compound the plastic so that the mulch maintains its integrity substantially throughout the growing system and then rapidly degrades as the crop ripens. It is also extremely difficult to estimate the weathering conditions the plastic will be exposed to in any given year. Most plastic mulches have to be removed from the fields prior to preparing for the next crop. This removal is a labour and energy intensive job. The removal cost is relatively high, about $ 125-150 per acre ( 0.4 Hectare). Plastic not removed may cause problems in further use of the fields.

In applying a plastic mulch it is not possible to change application weights and widths "on the fly", and the edge of the mulch must be buried in the soil to hold the mulch in place. The plastic mulch system requires special equipment, is relatively inflexible, and permits only about 75% of the plastic being effectively used, and must be laid tight to prevent flapping in the wind.

A liquid mulch of the present invention can be provided to enable various advantages, e.g. to overcome the above drawbacks of the plastic mulch system.

A first aspect of the present invention provides a liquid earth enhancing agent that forms a protective crust on application to the earth of the agent, which consists of an aqueous compound having a solids level of at least 30 percent by weight, characterized in that it comprises

A) a latex of a polymer having a Tg of less than 35°C and per 100 parts by dry weight of the latex -

B) from 100 to 1600 parts by weight of one or more fine particulate fillers.

A second aspect of the present invention provides a process for applying a liquid earth enhancing agent that forms a protective crust on application to the earth of the agent to a domain, characterised by said application provides a dry coat weight of 33.5 to 1674 g/m² (0.1 to 5.0 oz/ft²). The application of at least one agent of the first aspect of the present invention is optionally achieved by spraying.

The liquid agent is easily applied to any suitable domain (e.g. an agricultural domain). The agent may be applied by spraying, so that it is applied only as required, and the coat weight may be readily adjusted, and the agent may be applied simultaneously with seeding or transplanting. The liquid agent forms a protective crust at the domain, e.g. a friable crust which is readily broken by mechanical action. Thus, a field only need be ploughed and/or harrowed in preparation for the next planting. Generally, the protective crust provided by the present invention has sufficient integrity to help reduce evaporation yet has sufficient porosity to permit water or post applied fertilizer top dressing (particular nitrogen dressing) to enter the soil, especially during the later stages of plant development. The liquid agent permits the incorporation of e.g. a broader range of herbicides, insecticides, fungicides, and nematicides than those which may be incorporated into plastic mulch as such agents must be capable of withstanding extrusion temperatures of about 250°C.

As an added benefit, the present invention helps reduce soil erosion and the leaching of fertilizer due to wind and water. This helps reduce losses of young plants in heavy rains or high winds.

United States Patent 2,961,799, issued November 29, 1960, to Alco Oil and Chemical Corporation discloses a method for treating soil to prevent erosion. The method involves applying to the soil a composition comprising about 0.5 to 5, preferably about 2 to 4, weight per cent of a water insoluble rubber and 0.005 to 0.5, preferably about 0.05 to 0.15 weight per cent of a counter penetrant at a prescribed rate. The counter penetrant is used to prevent the composition significantly penetrating the top layer of soil. The mulch of the present invention contains a significantly higher solids level than that in the Arco patent. Such a mulch may not penetrate the soil but rapidly dry to form a crust on the soil surface.

British Patent 1,007,671, issued October 22, 1965, to The International Synthetic Rubber Company Limited discloses a process for controlling soil erosion. The process comprises applying to a soil a latex of an oil extended rubber. The rubber latex may be extended with from 50 to 1000 parts by weight of oil per 100 parts by weight of rubber. The latex is applied at a rate to provide from about 40 to 300 grams of oil extended rubber per square meter. The latex is applied at a solids content of from about 5 to 30 per cent. The mulch of the present invention may be used at a much higher solids content, namely in the 30 to 85 per cent total solids range.

British Patent 1,007,671 is primarily concerned with prevention of soil erosion.

British Patent 1,053,870, issued January 4, 1967, to The International Synthetic Rubber Company also deals with methods to prevent soil erosion. The surface of the soil is treated with rubber which has been extended with oil or bitumen or both. The bitumen helps reduce the cost of the treatment. The cost of oil has risen dramatically in the 1970's which tends to make the extending of rubber with oil less economicaly feasible for the application of rubbery emulsions to reduce soil erosion. The cost of bitumen has also increased in the 1970's making the use of latices extended with bitumen less economically feasible for the prevention of soil erosion.

Neither of the International Synthetic Rubber Company patents contemplates the high loading of particulate filler as required in the present invention. As noted above the filler loadings used in the present invention contribute to the formation of a crust on the agricultural domain.

In the present invention, the agent may be applied to an agricultural domain to enhance crop yield. The polymer need not form a continuous impermeable film. In fact, it may be desirable to apply a latex compound which forms a permeable crust.

There are a number of theories concerning factors which affect plant growth. Germination tends to require temperatures in excess of 12.8°C.Photosynthesis takes place at a relatively rapid rate at temperatures in the range from 10 to 35°C, with faster rates at higher temperatures. The transpiration of a plant is affected by the atmospheric temperature at the leaves and the soil temperature. The present invention may be used to Increase the soil temperature and the temperature above the soil. These increases in temperature should increase photosynthesis rate which should promote plant growth. The temperature increase should also increase transpiration rates in plants. It is believed that such increases should increase the water uptake of a plant and possibly increase the uptake of nutrients from the soil, in effect "force feeding" the plant.

As used on this specification , domain or agricultural domain is intended to be given a broad interpretation including, trays of flowers or vegetables grown in greenhouses, fields such as in growing cereals including corn and wheat and in vegetable and fruit farms, outdoor nurseries for trees, shrubs and plants, sod farms, and reforestation projects.

The phase capable of forming a protective crust under the conditions of use means that when the agent is applied to any domain, the agent will dry to a crust which will withstand normal weather conditions expected for the time period the crust will remain in place. These conditions and times may vary widely from a short period of about a month in a green house to a growing season on a farm field, to several years in a forest, vineyard or orchard. The capability of forming a protective crust under the conditions of use in most instances may be fairly simply tested. A sample liquid agent is applied to the soil at the desired dry coat weight and allowed to dry to form a crust. The crust is then sprinkled with an amount of water sufficient to approximate a heavy rain. The crust should not break up under these conditions. After the crust is dry it should crumble when lightly rubbed between the thumbs and forefingers.

Polymers used in accordance with the present invention must be capable of forming a crust with the other ingredients in the agent and the soil surface. Generally, the agent should be film forming under the conditions of use. Preferably, the polymer should have a glass transition temperature (Tg) of less than 35°C, most preferably the Tg of the polymer is less than 20°C. It is possible to compound a polymer having a Tg greater than 35°C with plasticizers so that the resulting agent would be capable of forming a protective crust under the conditions of use.

In the practice of the present invention, it is desirable to formulate the agent to have no, or a minimum, detrimental effect on the environment. In considering this desideratum one must take into account the facts that the components in the agent , and the agent per se will be left in an/or at the domain and that the domain may be subject to multiple treatments according to the present invention. In selecting ingredients one should consider available information and scientific opinion concerning the effect of each ingredient in the agent and their residues on the environment.

There are a great many types or families of polymers which may be used in accordance with the present invention. The length of time the crust is to remain in place will influence the selection of polymer.

Generally rubbery polymers are suitable for use in the present invention. This includes natural rubber, chloroprene, polyisoprene and synthetic rubber.

One synthetic rubber is a polymer consisting primarily of soft monomer such as $C_{4-6}$ conjugated diolefins and a hard monomer such as $C_{8-12}$ vinyl aromatic monomers or a $C_{2-8}$ alkenyl nitrile. Generally, the $C_{4-6}$ conjugated diolefin is present in an amount from 20 to 80 weight per cent of the polymer, preferably from 80 to 30, most preferably from 40 to 80 weight per cent of the polymer. The $C_{8-12}$ vinyl aromatic monomer is generally present in the polymer in an amount from 80 to 20 weight per cent of the polymer, preferably from 20 to 70, most preferably from 20 to 60 weight per cent of the polymer. Some $C_{8-12}$ vinyl aromatic monomers may be unsubstituted or substituted by a $C_{1-4}$ alkyl radical or a chlorine or bromine atom.

Some $C_{4-6}$ conjugated diolefins are butadiene and isoprene. Some $C_{8-12}$ vinyl aromatic monomers are styrene, alpha-methyl styrene, tertiary-butyl styrene, chlorostyrene, bromostyrene.

A synthetic rubber may also contain a monomer having a functional group. The monomer containing a functional group may be present in an amount from 0.5 to 10 weight per cent of the polymer, preferably from 0.5 to 5 weight per cent. The monomer having a functional group may be an acid, an ester, an aldehyde or an amide. Some acid monomers are $C_{3-9}$ ethylenically unsaturated carboxylic acids. Some ester monomers are $C_{1-8}$ alkyl or $C_{1-8}$ alkanol esters of $C_{3-9}$ ethylenically unsaturated carboxylic acids. Some aldehyde monomers are $C_{3-9}$ ethylenically unsaturated aldehydes. Some amides are amides of $C_{3-9}$ ethylenically unsaturated acids, which may be unsubstitued or substituted at the nitrogen atom by up to two $C_{1-4}$ alkyl or alkanol radicals.

Typical monomers containing functional groups are acrylic acid, methacrylic acid, fumaric acid, itaconic acid, cinnamic, citraconic acid, maleic acid, methyl acrylate, methyl methacrylate, ethyl acrylate, ethyl methacrylate, hydroxyethyl acrylate, hydroxyethyl methacrylate, ethylhexyl acrylate, ethylhexyl methacrylate, acrylamide, N-methyl acrylamide, N-ethyl acrylamide, methacrylamide, N-methyl methacrylamide, N-ethyl methacrylamide, N-methylol acrylamide, N-methylol methacrylamide, acrolein, methacrolein, and cinnamaldehyde.

In the foregoing polymers, up to 40 weight per cent of the $C_{8-12}$ vinyl aromatic monomer may be replaced by a $C_{3-9}$ alkenyl nitrile. The most common alkenyl nitrile is acrylonitrile.

Nitrile rubber polymers per se may also be used in accordance with the present invention. These polymers comprise from 5 to 35 weight per cent of a $C_{2-8}$ alkenyl nitrile, preferably acrylonitrile, and from 95 to 65 weight per cent of a $C_{4-6}$ conjugated diolefin. The nitrile rubber may also contain up to 10 weight per cent of a monomer which contains a functional group. Some monomers which contain functional groups have been listed above.

Polymeric binders useful in accordance with the present invention may be polymers of olefins and alkenyl or alkenol esters of $C_{1-8}$ saturated carboxylic acids. Some polymers comprise from about 1 to about 40 weight per cent of at least one $C_{2-4}$ mono-olefin and from about 99 to 60 weight per cent of a $C_{2-8}$ alkenyl or alkenol ester of a $C_{1-8}$ saturated carboxylic acid. Some mono-olefins are ethylene and propylene. The most common $C_{2-8}$ alkenyl or alkenol ester of a $C_{1-8}$ saturated carboxylic acid is vinyl acetate. Optionally, the polymers may also contain from 0.5 to 5 weight per cent of a monomer containing a functional group as described above.

The polymeric binder may be polymer of an $C_{2-3}$ olefin and an $C_{1-8}$ alkyl or $C_{1-8}$ alkanol ester of a $C_{3-9}$ ethylenically unsaturated $C_{3-9}$ carboxylic acid. The olefin may be present in an amount from 1 to 40 weight per cent. The alkyl or alkanol ester of a $C_{3-9}$ ethylenically unsaturated carboxylic acid may be present in an amount from 99 to 60 weight per cent. Optionally the polymer may contain from 0.5 to 10 weight per cent of a monomer having a functional group. Some olefins, esters and monomers having a functional group have been discussed above.

The polymer may be a functional olefin. The polymer may comprise from 10 to 20 weight per cent of a monomer containing a functional group preferably acrylic or methacrylic acid and the balance a $C_{2-3}$ olefin.

The polymeric binder may be an acrylic type binder. Such polymers may consist of from 60 to 99.5 weight per cent of a $C_{1-8}$ alkyl or alkanol ester of acrylic or methacrylic acid and from 0.5 to 40 weight per cent of a $C_{3-8}$ ethylenically unsaturated carboxylic acid. Some ethylenically saturated carboxylic acids have been listed above.

Some polymers which may be used in accordance with the present invention are polyvinyl chloride, ethylene-propylene copolymers, butyl rubber, copolymers of ethylene, propylene and a conjugated diene monomer, polysulfides (such as the condensation product of a $C_{2-4}$ olefin dichloride with sodium polydisulfide ),polybutadiene

Many of the above polymers may be prepared by free radical emulsion polymeriation processes. Usually the resulting latices are anionic or non ionic. The polymers may in some cases be prepared as cationic emulsions. Polymers which have not been prepared in an aqueous emulsion may be converted to a latex by techniques well known in the art. Organic solutions or dispersion of a polymer may be emulsified in water and the organic phase may then be driven off.

Depending on the type of polymer and the properties sought in the crust, the molecular weight and molecular weight distribution of the polymer may be controlled. Methods for controlling the molecular weight and molecular weight distribution of many emulsion polymers are well known and involve the use of "modifiers" such as carbon tetrachloride or an alkyl mercaptan.

The aqueous polymer dispersion is compounded with from 100 to 1600 parts by weight of a particulate filler. As the compound is generally intended to be applied as a spray, the filler should be of a sufficiently small size to pass through a spray nozzle. The filler should not be fibrous, that is, having a length substantially greater than its diameter. Some compounding ingredients are the fillers and pigments commonly used in the latex compounding. The filler may be finely divided matter of organic origin such as wood flour, sawdust, cellulose, starch, lignosulfonate, lignin, or very finely divided vegetable matter, or particulate organic waste, or a mixture thereof. The filler may be an inorganic material such as calcium carbonate, clay, stonedust, limestone, carbon black or micaflakes, or a mixture thereof. The micaflakes preferably should have a high aspect ratio. Such mica causes sunlight to be reflected which is believed to give a degree of insect control as well as cooling the soil in hotter climates. Preferably, the filler is used in an amount from about 300 to 800 parts by weight per 100 parts by dry weight of polymer. Depending upon the climate during the growing season the colour of the mulch may be selected to provide an increased benefit. Black agents provide maximum opacity. White agents provide cooler root temperature. Silver agents provide maximum cooling. Transparent agents allow maximum radiation to pass into the soil and may help soil sterilization. In cooler climates the agent preferably contains sufficient carbon black to make the resulting film heat absorbing. Generally the carbon black is not required in amounts in excess of 5 parts by weight per 100 parts by dry weight of polymer, preferably in the range from 1 to 3 parts by weight per 100 parts by weight of polymer. This dark coloured layer by increasing the soil temperature helps the seeds to germinate faster and promotes more vigorous early growth. In hot climates where soil baking tends to be a problem the agent should be heat reflective, preferably white. Under these conditions, the preferred filler would be calcium carbonate or slaked lime, possibly in conjunction with a pigment such as titanium dioxide to increase opacity and whiteness. Transparent agents may be prepared by selecting a filler having a refractive index substantially the same as the refractive index of the polymer. The foregoing illustrates general principles and it must be kept in mind that mixtures of different types of fillers and pigments are contemplated by the present invention.

In preparing the agent a surfactant may be required to ensure that the filler is well dispersed and the agent has suffecent mechanical stability for spraying. The amount of surfactant required will depend on the efficiency of the surfactant. The surfactant may be a soap of a long chain fatty acid or oil such as stearic, palmitic or rosin acid/soaps. The surfactant may be synthetic such as the commercially available sulfate, sulfonate and phosphate derivatives of alkyl, or alkyl aryl, hydrocarbons or the condensation products of polyalkylene glycols and alkyl or alkyl aryl hydrocarbons. (Commercially available surfactants are listed in the annual text Detergents and Emulsions by McCutcheon's). The charge on the surfactant should be compatible with the charge on the dispersion of polymeric binder. The compatibility of the surfactant and the polymeric dispersion can be simply tested by mixing a small sample of dispersion with surfactant and seeing if the dispersion is destabilized.

The amount of surfactant required will generally be in the range from 0.5 to 10 parts by weight per 100 parts by dry weight of polymer. The amount of surfactant required to stabilize the agent may be readily determined by routine experiments. In preparing the agent of the present invention, care should be taken to avoid localized destabilization. For carboxylated latices, it is preferable to add the filler dry. For less stable latices, the filler may have to be added as a paste or dispersion.

The agent may optionally contain a dispersing agent. The dispersing agent may be used in amounts up to 5 parts, preferably not greater than 1 to 2 parts by weight per 100 parts by weight of polymeric binder. There are many dispersing agents available. One suitable type of dispersing agent comprises polyphosphates. The total amount of surfactant and dispersing agent should be kept to a minimum to minimize the rewetting of the protective crust and consequent loss of strength.

The agent is generally prepared to a solids content of from about 30 to 85 weight per cent, preferably from 50 to 85 weight per cent. If desired, the agent may be subsequently diluted with water but this will require a higher application rate or multiple passes to achieve the required coat weight. Desirably the agent is used at not less than 30 weight per cent solids, most preferable not less than 50 weight per cent solids.

The agent may contain additional ingredients used in the agricultural industry. The agent may contain small amounts of viscosity control agents to provide a viscosity of about 1000 cps thus preventing the filler from settling out. Some thickeners are the natural thickeners such as guar gum, gum tragcanth, gum arabic, carrageenin, starch, pectin, cellulose, modified thickeners such as carboxymethyl cellulose and synthetic thickeners such as sodium polyacrylates.

The agent may also contain other agents to enhance crop production e.g. fertilizers, herbicides, fungicides, insecticides, nematicides and plant nutrients such as trace amounts of mineral salts containing one or more of sodium, manganese zinc, copper, iron, potassium, lithium, magnesium, boron, iodine, cobalt, molybdenum, silicon, fluorine, aluminium, nickel, selenium, and sulphur. Organic compounds, biostimulants and natural growth promoters such as yeast, auxentriolic acid, auxenolonic acid, indole acetic acid, naphtholine acetric acid, and auxin lactose may also be included in the mulch.

The agent could also contain small amounts of bacteria capable of producing nitrogen in the soil such as Azobacter and Adostridium posteuranium, and B. Radicicola. The amount of such growth enhancing materials in the total agent will be very low and should not cause instability in the agent.

If fertilizers, herbicides, nematicides, fungicides or insecticides are incorporated into the agent they will generally be used in fairly low amounts, usually not more than about 10 parts by weight, preferably in the range from about 1 to 4 parts by weight per 100 parts by weight of polymeric binder. Water soluble herbicides, insecticides, nematicides, fungicides, fertilizers or other growth stimulants are readily incorporated into the agent. Care should be taken to avoid destabilization of the agent which could lead to spraying problems. Hydrophobic fertilizers, herbicides, insecticides, nematicides, fungicides or plant growth stimulating agent may be prepared as oil in water emulsions, which may be added to the agent of the present invention.

AS noted above, the present invention provides greater flexibility in incorporating fertilizers, herbicides, insecticides, nematicides, fungicides and growth stimulating agents as they are not subjected to the extrusion temperatures required in the manufacture of plastic sheet mulch.

Our agent may be applied to a prepared field or unprepared terrain when employed in reforestation applications. Depending on the crop, the preparation may be as simple as harrowing the field. In high value vegetable and small fruit farming, the preparation tends to be more intensive. The field may be formed into raised beds in rows and a fumigant may be applied to the soil. The agent may be applied following fumigation. Preferably the soil is very lightly rolled to smooth and slightly compact the soil surface prior to applying the agent. If desired the crop may be seeded or transplants set in place prior to application of the agent. If required, guards may be placed on the spray applicator to prevent the latex from being applied where the seeds are sown. It is also possible to seed or transplant the crop subsequent to application of the agent. In this case the seed could be pregerminated if desired. The equipment to apply the agent will depend on the size of the area under cultivation. For the backyard gardener, greenhouse use, or for reforestation, a simple hand held sprayer will suffice. Liquid agent according to the present invention may be sold to apartment or indoor gardeners in aerosol or pump spray containers. For the commercial vegetable farmer conventionally available spray equipment with multispray capabilities and interchangeable tip capabilities is preferred. To minimize labour various pieces of farm equipment may be used in tandem. Thus a fumigent applicator, bed shaper, roller, planter, and sprayer could be used in tandem to provide a one pass planting, with a reduction in planting costs.

The agent may be applied to provide a dry coat weight of 0.1 to 5.0 (e.g. 0.25 to 1.0) oz/ft$^2$-33.5 to 1674 (e.g. 83.7 to 334.8) g/m$^2$ or thereabouts as some examples. The agent should dry to form a crust on the surface of the soil. At the low coat weight it may be desirable to apply the agent in a foamed state to control the application rate of agent. The use of foamed compound in textile applications is well known and disclosed in Canadian Patents 794,319 and 876,069 issued September 10, 1968 and July 20, 1971 respectively to Polymer Corporation.

In cases where it is desired to form a more impermeable film of mulch, it is possible to apply two or more coats.

As noted above, commercially available spray equipment may be used to apply the liquid. For some applications, such as transplant trays for vegetables or bedding plants or even corn fields, it may be preferable to spray the entire respective domain. In other applications, such as reforestation projects, the spray may be applied in an area of 6 to 60 ( preferably 18 to 24) inches (15.24 to 152.4 - preferably 45.7 to 70 - cm) around the base of a transplanted tree. In truck farming, the agent may be applied in strips down the field or raised beds; depending on the type of crop and the requirements of the equipment, these strips may be anywhere from 6 to 60 inches (15.24 to 152.4 cm) or the width of the spray equipment. By closing nozzles, or in more sophisticated equipment moving guards, the area of spray application may be divided into strips or bands. Generally for tomatoes and similar vegetables or fruits, the strips should extend from 6 to 60 (preferably 12 to 18) inches (15.24 to 152.4 - preferably 30.5 to 45.7 - cm) on each side of a row of plants.

The following are examples of some particular embodiments of components in the liquid agent.

The polymer can comprise 20 to 80 weight per cent of a $C_{4-6}$ conjugated diolefin, from 80 to 20 weight per cent of a mixture comprising from 100 to 60 weight per cent of a $C_{8-12}$ vinyl aromatic monomer which may be unsubstituted or substituted by a $C_{1-4}$ alkyl radical or a chlorine or bromine atom, and up to about 40 weight per cent of a $C_{3-9}$ alkenyl nitrile. Said polymer may further comprise from 0.5 to 10 weight per cent of one or more monomers selected from:

(i) $C_{3-9}$ ethylenically unsaturated carboxylic acids or $C_{1-8}$ alkyl or $C_{1-8}$ alkanol esters thereof;

(ii) $C_{3-9}$ ethylenically unsaturated aldehydes;

(iii) amides of $C_{3-9}$ ethylenically unsaturated acids which may be unsubstituted or substituted at the nitrogen atom by up to two $C_{1-4}$ alkyl or $C_{1-4}$ alkanol radicals.

The polymer can comprise of from 1 to 40 weight per cent of at least one $C_{2-4}$ mono olefin, and from 99 to 60 weight per cent of a $C_{2-8}$ alkenyl or alkenol ester of a $C_{1-8}$ saturated carboxylic acid. Said polymer may further comprise from 0.5 to 5 weight per cent of one or more monomers selected from:

(i) $C_{3-9}$ ethylenically unsaturated carboxylic acids or $C_{1-8}$ alkyl or $C_{1-8}$ alkanol esters thereof;

(ii) $C_{3-9}$ ethylenically unsaturated aldehydes;

(iii) amides of $C_{3-9}$ ethylenically unsaturated acids which may be unsubstituted or substituted at the nitrogen atom by up to two $C_{1-4}$ alkyl or $C_{1-4}$ alkanol radicals.

The polymer can comprise from 60 to 99.5 weight per cent of a $C_{1-8}$ alkyl or alkanol ester of acrylic or methacrylic acid, and from 0.5 to 40 weight per cent of a $C_{3-8}$ ethylenically unsaturated carboxylic acid.

The present invention is illustrated but not restricted by the following Examples.

EXAMPLES

In the Examples, a field at Port Lambton, Ontario, was prepared by ploughing and harrowing. A series of strips 20 feet ( 6.1 metres) long were treated as follows:

(a) No treatment (control)

(b) Covered with a plastic sheet; and

(c) Sprayed with agent at an application rate of

(i) 0.7 oz/ft$^2$,24 in wide( 234.4 g/m$^2$, 70cm)

The agent was formulated as follows, on a dry weight basis

| | |
|---|---|
| Latex A (a carboxylated SBR latex) | 100 parts |
| Surfactant | 0.5 |
| Dispersant | 1.25 |
| Calcium carbonate | 300 |

Water to 50 per cent solids.

Carbon black to provide a black or dark grey colour 1-2 parts

Viscosity control agent - to provide a viscosity of 1000 cps. to prevent filler settling out of the agent.

The agent was stable and did not suffer filler settling out and was applied using a hand sprayer. After the agent dried, transplanted tomato plants were planted in the control plastic sheet , and domains treated in accordance with the present invention.

The domains were sprayed on June 1, 1984 by July 20 the growth on the areas treated in accordance with the present invention was superior to the control areas and comparable to the domains treated with plastic sheet. The domains treated in accordance with the present invention had a darker surface than areas treated with plastic sheet. The agent applied in accordance with the present invention did not form a continuous film. Rather, the surface crust may break open in a manner similar to mud cracking in a dried puddle or pond. After harvesting the yield from the various experimental plots with a liquid agent applied at 0.7 oz./sq. foot dry weight (234.4 g/m$^2$).

|  | PLASTIC SHEET | SPRAYED AGENT | BARE SOIL |
|---|---|---|---|
| Width of treated area, ins.(cm) | (91.4)36 | (70) 24 | - |
| Type of Plastic | Pre slit | - | - |
| Plant spacing , ins.(cm) | (30.5)12 | (30.5)12 | (30.5)12 |
| No. of plants | 40 | 40 | 40 |
| No. alive 9 days after planting | 35 | 36 | 20 |
| Soil temp. 9 days after planting ,°F (°C) | (35) 95 | (37.8)100 | (21.1)70 |
| Fruit yield from 3 random plants* 80 days from planting ,lb (Kg) | (5.6) 12.3 | (6.1)13.5 | (3.4)7.5 |
| Total ripe fruit 80 days from planting ,lb (Kg) | (58.1) 128 | (56.3)124 | (29)64 |
| Days to first ripe pick | 72 | 75 | 80 |

\* Note Normally harvesting of this crop takes place about 90 days after planting. The yield from 3 random plants was a mixture of both green and ripe fruits.

The plastic sheet and the spray agent produced approximately the same amount of ripe fruit at about 80 days after planting. It is important to note that she rows treated with plastic sheet required a bed width of 91.4 cm. After harvest the areas treated in accordance with the present invention required no further treatment to remove the agent. The crust was completely friable and normal cultivation returned the soil to substantially the condition prior to application of the agent. To the farmer this is a significant saving over the cost required for removing plastic sheet from the field which may range from about $100 to $150 per acre.

In a laboratory experiment 10"x10" trays were filled to a depth of from 1 1/2" to 1 1/4" with soil ( i.e. 25.4x25.4cm ; 3.8 to 3.2 cm). Then each tray was planted with pregerminated tomato seeds. The trays were then sprayed with two different agents at various coat weights. Agent formulation was as n example 1. In one case Latex A described above was used, in the other case another carboxylated SBR latex having a higher styrene content was used, (Latex B). The coating was applied at various weights. The trays were then placed in the open air on top of the research laboratories of Polysar Limited.

During this test program one of the most impressive things observed was the relatively luxuriant nature of growth rate for the seedlings in those two trays where spray agent had been employed compared to the control. The differences were most impressive to see but difficult to describe. To aid in conveying these differences a "growth index" value is employed. It is derived by multiplying the approximate average height of the seedling in a given tray by the average diameter of the foliage umbrella, in centimeters. The values given appear to reasonably convey the relative differences in growth vigor. The explanation(s) for the increased vigor was improved heat and moisture retention.

On day 6, the temperature of the soil in the trays was measured. The air temperature at the time of measuring soil temperature was 31.7°C. The experiment had to be terminated due to an extremely severe wind and rain storm which removed some surface soil and exposed the roots of the plants in the control tray. No evidence of such soil loss observed in any of the trays treated in accordance with the present invention.

The results are recorded in the following table entitled "Emergence Studies".

EP 0 177 226 B1

On August 21, 1984, a sample of the mulch prepared with Latex A was tested in La Salle, Michigan, for field sprayability. The agent was evenly sprayed using a single spray tip in a 2 ft (61cm) wide path at a tractor speed of 0.5 mph. (0.8 Kmph). Dry coat weight was about 0.69 oz/ft²(231.1 g/m²). Tractor speed was that normally used to transplant tomatoes. The crust dried quickly and measurements were taken of the air temperature above the crust surface and in the soil at a 6" depth. (15.24cm). The results are as follows:

## EMERGENCE STUDIES - EFFECT OF COATING WEIGHT

NOTE: Temperature Profile is soil temperature 1" (2.54 cm) below the soil surface at 1 P.M., July 30, air temperature 89.2°F (31.8°C)

| TRAY # | 1 | 2 | 3 | 4 | 5 | 6 | 7 | 8 | 9 | 10 |
|---|---|---|---|---|---|---|---|---|---|---|
| AGENT | CONTROL | ----------LATEX A-------------- | | | | | ---------LATEX B------- | | | |
| COATING - OZ /FT² | NIL | 0.125 | 0.25 | 0.5 | 0.75 | 1.0 | 0.125 | 0.25 | 0.5 | 0.75 |
| G/M² | NIL | 41.8 | 83.7 | 167.4 | 251.1 | 334.8 | 41.8 | 83.7 | 167.4 | 251.1 |
| % EMERGENCE @ DAY 1 | 0 | 0 | 0 | 0 | 0 | 0 | 0 | 0 | 0 | 0 |
| 2 | 0 | 0 | 0 | 0 | 0 | 0 | 0 | 0 | 0 | 0 |
| 3 | 6 | 3 | 6 | 11 | 3 | 6 | 3 | 6 | 3 | 3 |
| 6 | 8 | 11 | 42 | 53 | 25 | 28 | 31 | 42 | 25 | 22 |
| 7 | 25 | 14 | 50 | 58 | 39 | 33 | 39 | 47 | 28 | 33 |
| 8 | 25 | 17 | 56 | 58 | 42 | 33 | 39 | 50 | 31 | 33 |
| 9 | 25 | 20 | 56 | 67 | 44 | 33 | 39 | 50 | 42 | 36 |
| 10 | 25 | 22 | 61 | 67 | 44 | 36 | 39 | 53 | 42 | 39 |
| 14 | 36 | 28 | 67 | 67 | 50 | 36 | 39 | 56 | 50 | 42 |
| 21 | 36 | 28 | 67 | 67 | 50 | 39 | 39 | 56 | 50 | 42 |
| GROWTH INDEX @ DAY 21 | 7 | 42 | 24 | 56 | 13 | 30 | 28 | 14 | 10 | 25 |
| TEMPERATURE PROFILE °F | 96.1 | 95.7 | 96.6 | 96.6 | 98.1 | 99.1 | 97.5 | 97.0 | 96.8 | 97.9 |
| °C | 35:6 | 35.4 | 35.9 | 35.9 | 36.7 | 37.3 | 36.4 | 36.1 | 36 | 36.6 |

9

|  | Soil | Covered With Liquid Agent |
|---|---|---|
| Air Temp., °F (°C) | 90 (32.2) | 100 (37.8) |
| Soil Temp. at 6" °F (15.3cm, °C) | 78 (25.6) | 81 (27.2) |

For the purposes of comparison, a series of experiments were conducted to compare the growth of pregerminated tomato seeds treated in accordance with the present invention and treated in accordance with British Patent 1,007,671 and United States Patent 2,961,799.

A series of 10"x10"x2.25" trays were filled with soil to a depth of about 2" (25.4x25.4x5.72; 5.1 cm) with commercial top soil. In each tray, 25 pregerminated tomato seeds were planted at a depth 0.37"(0.94cm). The trays were then treated in the following manner.

One tray was untreated. This serves as a control.

Two trays were treated in accordance with the present invention. The agent was a retained sample from the agent applied to the soil in a commercial manner using a single tip sprayer. The agent was applied at a 50 per cent solids level to provide dry coat weights of 0.75 and 0.5 oz./foot$^2$. ( 251.1; 167.4 g/m$^2$). In a further comparative example, the solids level was diluted to 25 per cent.

A series of trays were treated in accordance with Example 10 of British Patent 1,007,671. Example 10 was selected as it was felt to be closest to the subject matter of the present invention in terms of solids content and pigment levels.

In all the examples in this series of experiments, the latex used was a carboxylated SBR latex commercially produced by Polysar Limited. The latex was extended with Sundex 890* oil. The oil was added to the latex as an oil in water emulsion prepared in accordance with the teaching from line 63 through line 75 at page 3 of the disclosure. Ionic stabilizer was not added to the oil in water emulsion. ( * = Trademark.)

The agent formula in parts by dry weight was as follows:

```
                     Emulsion
                     Solids       Dry Parts

Latex                  ---           100
Sundex 890 emulsion   (50%)          300
Carbon black          (35%)            4
Water                  ---           ---        to 30% solids
```

The agent was applied at a dry coat weight of 0.5 oz/ft$^2$(167.4g/m$^2$) and 0.1667 oz/ft$^2$( 55.81 g/m$^2$). This later application was based on the rate of 1/4 imperial print/yd$^2$(0.17L/m$^2$) specified in the example.) The dry coat weight corresponds to wet coat weights of 11.00 grams per tray and 33 grams per tray respectively.

A compound was prepared in accordance with the formulation given at lines 50 to 56 of Col. 11 of U.S. Patent 2,961,799. The compound was applied to three trays. The coat weights were 0.25 and 5.0 oz. of rubber per square yard, based on the minimum and maximum coat weights disclosed at line 8 of Col. 7 ( 7.78g, 155.5g). application rates of 0.0278, 0.5556 oz/ft$^2$ ( 9.3, 186 g/m$^2$). The remaining tray was treated to provide a dry weight of 0.5 oz/ft$^2$( 167.4 g/m$^2$).

When the trays were initially prepared, the coatings in accordance with the present invention dried rapidly to form a crust. The coatings in accordance with the prior art had a much higher water content and the trays were extremely wet. The coating compositions had a greater tendancy to penetrate the soil.

The trays were placed on the roof of the Polysar Research Building at Sarnia, Ontario. The trays were placed out on August 30, 1984, and the following observations were made.

Colour indicates the darkness of the surface of the tray when the samples were put outside. The colour was judged on a scale of 1 to 10 with 10 being the darkest.

The Growth Index was calculated as described above.

When the plants here placed outdoors, it was towards the end of the growing season. The weather was cooler than normal and there were several severe thunderstorms. Generally, the emergence of the plants was low and the Growth Index was low.

COMPARATIVE EXAMPLES

| TRAY # | 1 | 2 | 3 | 3A | 4 | 5 | 6 | 7 | 8 |
|---|---|---|---|---|---|---|---|---|---|
| AGENT | CONTROL | INVENTION | INVENTION | | UK 1,007,671 | UK 1,007,671 | US 2,961,799 | US 2,961,799 | US 2,961,799 |
| COATING – OZ./FT² | NIL | 0.75 | 0.5 | 0.5 | 0.167 | 0.5 | .0278 | .5556 | 0.5 |
| G/M² | | 251.1 | 167.4 | 167.4 | 55.9 | 167.4 | 9.31 | 186 | 167.4 |
| COLOUR | 1 | 7 | 6 | 4 | 5 | 5 | 2 | 3 | 3 |
| % EMERGENCE @ DAY 1 | 0 | 0 | 0 | 0 | 0 | 0 | 0 | 0 | 0 |
| 6 | 8 | 4 | 12 | 0 | 8 | 0 | 0 | 0 | 0 |
| 7 | 8 | 16 | 24 | 0 | 16 | 4 | 4 | 0 | 4 |
| 8 | 12 | 32 | 38 | 0 | 20 | 0 | 4 | 4 | 8 |
| 9 | 24 | 36 | 60 | 4 | 40 | 8 | 20 | 8 | 8 |
| 12 | 36 | 40 | 68 | 28 | 72 | 32 | 40 | 12 | 36 |
| 13 | 36 | 40 | 72 | 28 | 72 | 32 | 44 | 16 | 36 |
| 15 | 36 | 40 | 72 | 28 | 72 | 32 | 44 | 16 | 36 |
| 16 | 36 | 40 | 72 | 28 | 72 | 32 | 44 | 16 | 36 |
| 19 | 36 | 40 | 72 | 28 | 72 | 32 | 44 | 16 | 36 |
| GROWTH INDEX @ DAY 21 | 4.1 | 6.3 | 6.1 | 3.0 | 2.5 | <2.0 | 4.6 | 2.3 | 3.8 |

NOTE:  DAY 1 – AUGUST 30, 1984.
TRAY 3A – COMPOUND SPRAYED AT 25.0 PER CENT SOLIDS.

On day 6, the soil temperature at the bottom of the trays was measured. The results are:

11

| Tray No. | 1 | 2 | 3 | 3A | 4 | 5 | 6 | 7 | 8 |
|---|---|---|---|---|---|---|---|---|---|
| Temp. (°F) | 70 | 76 | 75 | 76 | 74 | 73 | 72 | 72 | 72 |
| (°C) | 21.1 | 24.4 | 23.9 | 24.4 | 23.3 | 22.8 | 22.2 | 22.2 | 22.2 |

## Claims

1. A liquid soil enhancing agent that forms a protective crust on application to the earth of the agent, which consists of an aqueous dispersion having a solids level of at least 30 percent by weight, characterized in that it comprises

   A) a latex of a polymer having a Tg of less than 35°C and - per 100 parts by dry weight of the latex -

   B) from 100 to 1600 parts by weight of one or more fine particulate fillers.

2. An agent according to claim 1 wherein said polymer comprises from 20 to 80 weight percent of a $C_{4-6}$ conjugate diolefin, from 80 to 20 weight percent of a mixture comprising from 100 to 60 weight percent of a $C_{8-12}$ vinyl aromatic monomer which may be unsubstituted or substituted by a $C_{1-4}$ alkyl radical or a chlorine or bromine atom and up to 40 weight percent of a $C_{3-9}$ alkenyl nitrile.

3. An agent according to Claim 2 wherein said polymer further comprises from 0.5 to 10 weigth percent of one ore more monomers selected from the group:
   (i) $C_{3-9}$ ethylenically unsaturated carboxylic acids or $C_{1-8}$ alkyl or $C_{1-8}$ alkanol esters thereof.
   (ii) $C_{3-9}$ ethylenically unsaturated aldehydes.
   (iii) Amides of $C_{3-9}$ ethylenically unsaturated acids which may be unsubstituted or substituted at the nitrogen atom by up to two $C_{1-4}$ alkyl or $C_{1-4}$ alkanol radicals.

4. An agent according to Claim 1 wherein said polymer comprises from 1 to 40 weight percent of at least one $C_{2-4}$ mono olefin, and from 99 to 60 weight percent of a $C_{2-8}$ alkenyl or alkenol ester of a saturated $C_{1-8}$ carboxylic acid.

5. An agent according to Claim 4 wherein said polymer further comprises from 0.5 to 5 weight percent of one or more monomers selected from:
   (i) $C_{3-9}$ ethylenically unsaturated carboxylic acids or $C_{1-8}$ alkyl or $C_{1-8}$ alkanol esters thereof;
   (ii) $C_{3-9}$ ethylenically unsaturated aldehydes;
   (iii) amides of $C_{3-9}$ ethylenically unsaturated acids which may be unsubstituted or substituted at the nitrogen atom by up to two $C_{1-4}$ alkyl or $C_{1-4}$ alkanol radicals.

6. An agent according to Claim 1 wherein said polymer comprises from 60 to 99.5 weight percent of a $C_{1-8}$ alkyl or alkanol ester of acrylic or methacrylic acid, and from 0.5 to 40 weight percent of a $C_{3-8}$ ethylenically unsaturated carboxylic acid.

7. An agent according to claims 1 to 6, characterised by said polymer has a Tg of less than 20°C.

8. An agent according to claims 1 to 7, characterised by said filler is selected from: wood flour, sawdust, cellulose, starch, lignosulfonate, lignin, finely divided particulate vegetable matter, particulate organic waste, calcium carbonate, clay, stonedust, limestone, carbon black, micaflakes, slaked lime, or any mixture therefrom.

9. An agent according to claims 1 to 8, characterised by further comprising at least one additive, optionally selected from: a water dispersible herbicide, a water dispersible pesticide, or any mixture therefrom.

10. A process for applying an agent according to claims 1 to 9 to a domain, characterised by said application provides a dry coat weight of 33.5 to 1674 $g/m^2$ (0.1 to 5.0 $oz/ft^2$).

**11.** A process for enhancing crop production, characterised by said enhancement is enabled by a process as claimed in claim 10.

**Revendications**

**1.** Agent liquide d'amendement de la terre, qui forme une croûte protectrice par application de l'agent à la terre, qui se compose d'une dispersion aqueuse possédant une teneur en solides d'au moins 30% en poids, caractérisé en ce qu'il comprend
A) un latex d'un polymère possédant une Tg (température de transition vitreuse) inférieure à 35°C et - par 100 parties en poids sec du latex -
B) de 100 à 1600 parties en poids d'une ou plusieurs charges particulaires.

**2.** Agent suivant la revendication 1, caractérisé en ce que le polymère comprend de 20 à 80% en poids d'une dioléfine conjuguée en $C_4$-$C_6$, de 80 à 20% en poids d'un mélange constitué de 100 à 60% en poids d'un monomère vinylaromatique en $C_8$-$C_{12}$, qui peut ne pas être substitué ou être substitué par un radical alkyle en $C_1$-$C_4$, ou un atome de chlore ou un atome de brome et jusqu'à 40% en poids d'un alcénylnitrile en $C_3$-$C_9$.

**3.** Agent suivant la revendication 2, caractérisé en ce que le polymère comprend, en outre, de 0,5 à 10% en poids d'un ou plusieurs monomères choisis dans le groupe formé par :
(i) des acides carboxyliques à insaturation éthylénique en $C_3$-$C_9$ ou leurs esters alkyliques en $C_1$-$C_8$ ou d'alcanols en $C_1$-$C_8$,
(ii) les aldéhydes à insaturation éthylénique en $C_3$-$C_9$,
(iii) les amides d'acides à insaturation éthylénique en $C_3$-$C_9$, qui peuvent ne pas être substitués ou être substitués sur l'atome d'azote par jusqu'à deux radicaux alkyle en $C_1$-$C_4$ ou alcanol en $C_1$-$C_4$.

**4.** Agent suivant la revendication 1, caractérisé en ce que le polymère précité comprend de 1 à 40% en poids d'au moins une monooléfine en $C_2$-$C_4$ et de 99 à 60% en poids d'un ester d'alcanol ou d'alcényle en $C_2$-$C_8$ d'un acide carboxylique saturé en $C_1$ à $C_8$.

**5.** Agent suivant la revendication 4, caractérisé en ce que le polymère précité comprend, en outre, de 0,5 à 5% en poids d'un ou plusieurs monomères choisis parmi :
(i) les acides carboxyliques à insaturation éthylénique en $C_3$-$C_9$, ou leurs esters alkyliques en $C_1$-$C_8$ ou d'alcanols en $C_1$-$C_8$,
(ii) les aldéhydes à insaturation éthylénique en $C_3$-$C_9$,
(iii) les amides d'acides à insaturation éthylénique en $C_3$-$C_9$, qui peuvent ne pas être substitués ou être substitués sur l'atome d'azote par jusqu'à deux radicaux alkyle en $C_1$-$C_4$ ou alcanol en $C_1$-$C_4$.

**6.** Agent suivant la revendication 1, caractérisé en ce que le polymère précité comprend de 60 à 99,5% en poids d'un ester d'alcanol ou alkylique en $C_1$-$C_8$ de l'acide acrylique ou de l'acide méthacrylique et de 0,5 à 40% en poids d'un acide carboxylique à insaturation éthylénique en $C_3$-$C_8$.

**7.** Agent suivant les revendications 1 à 6, caractérisé en ce que le polymère précité possède une Tg inférieure à 20°C.

**8.** Agent suivant les revendications 1 à 7, caractérisé en ce que l'on choisit la charge parmi la farine de bois, la sciure de bois, la cellulose, l'amidon, les lignosulfonates, la lignine, les matières végétales particulaires finement divisées, des déchets organiques particulaires, le carbonate de calcium, l'argile, la poussière de pierre, la pierre calcaire, le noir de carbone, les paillettes de mica, la chaux éteinte, ou n'importe quel mélange de ces produits.

**9.** Agent suivant les revendications 1 à 8, caractérisé en ce qu'il comprend, en outre, au moins un additif éventuellement choisi parmi un herbicide dispersible dans l'eau, un pesticide dispersible dans l'eau ou n'importe quel mélange de ces produits.

**10.** Procédé pour appliquer un agent suivant l'une quelconque des revendications 1 à 9 à un domaine, caractérisé en ce que cette application donne un poids de revêtement à sec de 33,5 à 1674 g/m$^2$ (0,1 à 5,0 oz/ft$^2$).

**11.** Procédé pour augmenter la production des récoltes, caractérisé en ce que cette augmentation s'effectue par mise en oeuvre d'un procédé suivant la revendication 10.

**Patentansprüche**

**1.** Flüssiges Bodenverbesserungsmittel, welches bei Aufbringung auf die Erde eine schützende Kruste aus dem Mittel bildet, welche aus einer wäßrigen Dispersion mit einem Feststoffgehalt von mindestens 30 Gewichtsprozent besteht, dadurch gekennzeichnet, daß es

    A) einen Polymerlatex mit einer Tg von weniger als 35°C und - pro 100 Teile Trockengewicht des Latex -

    B) 100 bis 1600 Gewichtsteile eines oder mehrerer feinverteilter Füllstoffe

umfaßt.

**2.** Mittel gemäß Anspruch 1, in welchem das genannte Polymer 20 bis 80 Gewichtsprozent eines konjugierten $C_{4-6}$-Diolefins und 80 bis 20 Gewichtsprozent eines Gemisches beinhaltend 100 bis 60 Gewichtsprozent eines vinylaromatischen $C_{8-12}$-Monomeren, welches unsubstituiert oder durch eine $C_{1-4}$-Alkylgruppe oder ein Chlor- oder Bromatom substituiert sein kann und bis zu 40 Gewichtsprozent eines $C_{3-9}$-Alkenylnitrils, umfaßt.

**3.** Mittel gemäß Anspruch 2, in welchem das genannte Polymer außerdem 0,5 bis 10 Gewichtsprozent ein oder mehrerer Monomeren aus der Gruppe von

    (i) ethylenisch ungesättigten $C_{3-9}$-Carbonsäuren oder deren $C_{1-8}$-Alkyl- oder $C_{1-8}$-Alkanolestern;

    (ii) ethylenisch ungesättigten $C_{3-9}$-Aldehyden;

    (iii) Amiden von ethylenisch ungesättigten $C_{3-9}$-Säuren, welche unsubstituiert oder am Stickstoffatom durch bis zu zwei $C_{1-4}$-Alkyl- oder $C_{1-4}$-Alkanol-Gruppen substituiert sein kann,

umfaßt.

**4.** Mittel gemäß Anspruch 1, in welchem das genannte Polymer 1 bis 40 Gewichtsprozent mindestens eines $C_{2-4}$-Monoolefins und 99 bis 60 Gewichtsprozent eines $C_{2-8}$-Alkenyl- oder -Alkenolesters einer gesättigten $C_{1-8}$-Carbonsäure umfaßt.

**5.** Mittel gemäß Anspruch 4, in welchem das genannte Polymer weiterhin 0,5 bis 5 Gewichtsprozent eines oder mehrerer Monomeren aus der Gruppe

    (i) ethylenisch ungesättigter $C_{3-9}$-Carbonsäuren oder deren $C_{1-8}$-Alkyl- oder $C_{1-8}$-Alkanolester;

    (ii) ethylenisch ungesättigter $C_{3-9}$-Aldehyde;

    (iii) von Amiden ethylenisch ungesättigter $C_{3-9}$-Säuren, welche unsubstituiert oder am Stickstoffatom durch bis zu zwei $C_{1-4}$-Alkyl oder $C_{1-4}$-Alkanolgruppen substituiert sein kann,

umfaßt.

**6.** Mittel gemäß Anspruch 1, in welchem das genannte Polymer 60 bis 99,5 Gewichtsprozent eines $C_{1-8}$-Alkyl- oder -Alkanolesters von Acryl- oder Methacrylsäure und 0,5 bis 40 Gewichtsprozent einer ethylenisch ungesättigten $C_{3-8}$-Carbonsäure umfaßt.

**7.** Mittel gemäß den Ansprüchen 1-6, dadurch gekennzeichnet, daß das genannte Polymer eine Tg von weniger als 20°C aufweist.

**8.** Mittel gemäß den Ansprüchen 1-7, dadurch gekennzeichnet, daß der genannte Füllstoff ausgewählt ist aus der Gruppe von Holzmehl, Sägemehl, Cellulose, Stärke, Ligninsulfonat, Lignin, feinverteilten Gemüsestoffen, teilchenförmigem organischen Abfall, Calciumcarbonat, Ton, Steinmehl, Kalkstein, Ruß, Glimmerflocken, gelöschtem Kalk, oder deren beliebigen Gemischen.

**9.** Mittel gemäß den Ansprüchen 1-8, dadurch gekennzeichnet, daß es weiterhin mindestens einen Zusatz, gegebenenfalls ausgewählt aus der Gruppe von wasserdispergierbarem Herbizid, wasserdispergierbarem Pestizid oder deren beliebigen Gemischen, umfaßt.

**10.** Verfahren zur Aufbringung eines Mittels gemäß den Ansprüchen 1-9 auf ein Gebiet, dadurch gekennzeichnet, daß die genannte Aufbringung zu einem Trockenüberzugsgewicht von 33,5 bis 1674 g/m$^2$ (0,1 bis 5,0 Unzen/Fuß$^2$) führt.

**11.** Verfahren zur Verbesserung des Ernteertrags, dadurch gekennzeichnet, daß die genannte Verbesserung durch ein Verfahren gemäß Anspruch 10 bewirkt wird.